# EUROPÄISCHE PATENTSCHRIFT

(11) **EP 1 286 497 B1**
(45) Veröffentlichungstag und Bekanntmachung des Hinweises auf die Patenterteilung: **03.11.2004**
(21) Anmeldenummer: 01440243.2
(22) Anmeldetag: 30.07.2001
(51) Int. Cl.: H04L 12/24, H04Q 3/00

(54) **Verfahren zur visuellen Darstellung von Zuständen von Netzelementen eines zu überwachenden Netzwerks, sowie eine Überwachungseinrichtung und ein Programmmodul hierfür**
Method for graphically representing the status of network elements of a monitored network, and corresponding monitoring system and program module
Procédé pour la représentation graphique de l' état de noeuds de réseau dans un réseau surveillé, et système de surveillance et module de programme associé

(43) Veröffentlichungstag der Anmeldung: 26.02.2003
(73) Patentinhaber: ALCATEL, 75008 Paris (FR)
(72) Erfinder: Takats, Martin, Dr., 12619 Berlin (DE)
(74) Vertreter: Rausch, Gabriele, Dr.

(56) Entgegenhaltungen:
- US-A- 6 112 015
- "X.733: INFORMATION TECHNOLOGY - OPEN SYSTEMS INTERCONNECTION - SYSTEMS MANAGEMENT: ALARM REPORTING FUNCTION. INTERNATIONAL STANDARD" INTERNATIONAL STANDARD ISO/IEC, Bd. 24562, 1992, Seiten 1-18,

## Beschreibung

Die Erfindung betrifft ein Verfahren zur visuellen Darstellung von Zuständen von Netzelementen eines zu überwachenden Netzwerks in einer Überwachungseinrichtung nach dem Oberbegriff des Anspruch 1, sowie eine Überwachungseinrichtung und Programmmodul hierfür.

Zur Überwachung und Steuerung eines Kommunikationsnetzes mit einer Vielzahl von Netzelementen werden heute zentrale Überwachungsverfahren mit standardisierten Meldungen eingesetzt. Einen wesentlichen Teil dieser Überwachungsverfahren betrifft die Alarmverwaltung. Zu der Alarmverwaltung gehört die Sammlung aller Alarmmeldungen von Objekten des überwachten Netzes oder Teilnetzes, die Ermittlung von Alarmzuständen und die visuelle Darstellung der Meldungen und Alarmzustände. Die Alarmmeldungen und sind von der International Telecommunication Unit (ITU) als Recommendation X.733 mit dem Titel "Information Technology - Open System Interconnection - System Management: Alarm Reporting Function" normiert, im folgenden kurz ITU-Richtlinie X.733 genannt. Dabei werden insbesondere Alarmtypen, Alarmursachen, Alarm-Schweregrade (engl.: alarm severity levels) oder Dringlichkeitsstufen und verschiedene Alarmdarstellungen, beispielsweise eine Trendanzeige (engl.: trend indication) und eine Schwellwertanzeige (engl.: threshold information) definiert. Zur Trendanzeige wird ermittelt, ob die Dringlichkeit eines aktuell ermittelten Alarms höher gleich oder geringer ist, als die Dringlichkeit aller bisher ermittelten (und noch aktuellen) Alarme.

Die Überwachung eines Kommunikationsnetzes erfolgt je nach Größe dieses Netzes von einer oder mehreren zentralen Überwachungsstellen aus. Eine effiziente Überwachung mit möglichst geringem Personalaufwand erfordert die Konzentration der Überwachungseinrichtung auf möglichst wenige Überwachungsstellen. Dies bedeutet, dass eine Überwachungsstelle für die Überwachung einer Vielzahl von Netzeinrichtungen, beispielsweise für mehr als 50 Vermittlungsstellen zuständig ist. Die Leistungsfähigkeit einer Überwachungsstelle hängt in hohem Maße von der Benutzeroberfläche, d.h. der visuellen Darstellung von Alarmmeldungen und Alarmzuständen und der Trendanzeige von Alarmzuständen ab.

Ein wesentliches Problem der visuellen Darstellung der Überwachungseinrichtungen heutiger Kommunikationsnetze, beispielsweise der sogenannten "Switch Management Centers" für Netzbetreiber, besteht darin, dass die Information über Alarmmeldungen und Alarmzustände nicht optimal aufbereitet ist. Ein Bediener muss auch im Normalfall, d.h. ohne Anliegen besonderer Ereignisse oder Zustände, häufig zwischen verschiedenen Bildschirmfenstern wechseln, um die notwendige Information zur Überwachung des Netzes oder eines Teilnetzes zu erhalten. So wird zur Übersicht beispielsweise ein Fenster mit einer Netzgrafik (engl.: network map) angeboten, bei der die einzelnen Netzelemente des zu überwachenden Kommunikationsnetzes mit ihren Beziehungen zueinander dargestellt wird. Die Netzelemente werden als Bildobjekte dargestellt, welche beispielsweise einen Namen, ein Symbol, beispielsweise ein Symbol für eine Vermittlungsstelle enthalten, eine numerische Darstellung eingegangener, noch anhängiger Alarme und je nach aktueller Dringlichkeit eine definierte Farben annehmen kann. Die Beziehungen der Netzelemente untereinander werden durch Verbindungslinien dargestellt. Aufgrund des komplexen Beziehungsgeflechts kann nur eine sehr begrenzte Anzahl von Netzelementen in einem Bildschirmfenster dargestellt werden. Um jedes dieser Netzelemente bei Bedarf darstellen zu können, wird das Netz in mehrere Teilnetze oder Untergrafiken aufgeteilt, wobei in einer oberen Darstellungsebene diese Teilnetze jeweils als ein Bildobjekt angezeigt werden und erst bei anwählen oder anklicken eines solchen Bildelements eine entsprechende Untergrafik mit den darin enthaltenen Netzelementen gezeigt wird.

Ein weiteres Fenster zeigt beispielsweise in einer rollbaren (engl.: to scroll) Liste alle eingegangene Alarmmeldungen in ihrer zeitlichen Reihenfolge an. Die eingegangenen Alarmmeldungen lassen sich dabei auch nach bestimmten Kriterien filtern. So ist es beispielsweise möglich, nur Alarmmeldungen ab einem bestimmten Schweregrad anzeigen zu lassen.

Zur Verfolgung der Alarmzustände der Netzelemente muss der Bediener häufig zwischen den oben beschriebenen Ansichten wechseln. Zur Einschätzung der dynamischen Entwicklung von Alarmzuständen, d.h. zur Trendprognose ist es zudem notwendig, aktuelle Alarmzahlen mit früher gezeigten Alarmzahlen zu vergleichen.

Darüber hinaus ist es oft schwierig, komplexe Netze mit einer Vielzahl von Netzelementen umfassend darzustellen. Die US 6,112,015 offenbart dazu ein Verfahren, bei welchem Netzobjekte eines Netzwerkes als sogenannte Icons auf einem Bildschirm dargestellt werden. Verschiedene Zustände oder Statusinformationen dieser Netzobjekte können jeweils durch bestimmte Darstellungsweisen oder Attribute dieser Icons (z.B. durch eine gestrichelte, fette oder dreidimensional nachempfundene Umrandung) dargestellt werden.

Der Erfindung liegt die Aufgabe zugrunde, ein Verfahren zur kompakten Darstellung eines Netzwerks und seiner dynamischen Entwicklung von Alarmzuständen und die zu seiner Ausführung erforderlichen Mittel zu schaffen.

Erfindungsgemäß wird diese Aufgabe durch ein Verfahren nach der Lehre des Anspruchs 1, eine Überwachungseinrichtung nach der Lehre des Anspruchs 7 und ein Programmmodul nach der Lehre des Anspruchs 8 gelöst.

Grundgedanke der Erfindung ist es, aus eingehenden Meldungen eines Netzelements oder für ein Netzelement einen aktueller Zustand aus einer Menge mögliche Zustände für die Netzelemente eines zu überwachenden Netzwerkes zu ermitteln, die Anzahl unerledigter Meldungen eines Netzelementes zu bestimmten Zeitpunkten zu ermitteln, und daraus einen aktuellen Zustandstrend zu ermitteln, alle Netzelemente oder ausgewählte Netzelemente als Bildobjekte auf einem Bildschirm darzustellen, wobei jedes Bildobjekt mindestens den für das entsprechende Netzelement ermittelten aktuellen Zustand und Zustandstrend anzeigt.

Im folgenden wird stets von der Überwachung von Kommunikationsnetzen ausgegangen, da die Anwendung der Erfindung wegen der Komplexität dieser Netzwerke, d.h. der hohen Anzahl von Netzelementen und der Komplexität dieser Netzelemente besonders geeignet ist. Es ist aber auch die Überwachung anders gearteter Netze denkbar. So kann das erfindungsgemäße Verfahren auch auf ein Eisenbahnnetz mit Weichen, Gleisfreimelde-Einrichtungen und Signalen als Netzelemente oder auf ein Stromversorgungsnetz mit Sicherungen, Spannungswandlern etc. als Netzelemente angewandt werden.

Wegen der großen Bedeutung des Alarmmanagements in Kommunikationsnetzen werden im folgenden nur Alarmmeldungen und ihre Behandlung beschrieben. In gleicher Weise lässt sich die Erfindung auch auf andere Meldungen, beispielsweise sogenannte freilaufende Meldungen in diesen Netzen anwenden.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:
- Fig.1: zeigt schematisch ein zu überwachendes Netzwerk mit einer erfindungsgemäßen Überwachungseinrichtung und
- Fig.2: zeigt einen Ausschnitt einer visuellen Darstellung von aktuellen Zuständen von Netzelementen.

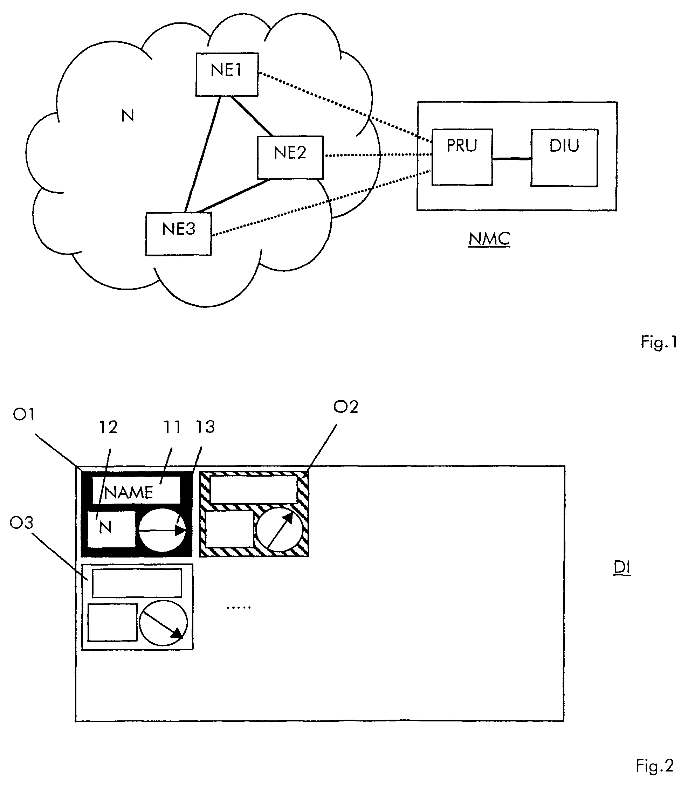

Fig.1 zeigt ein Kommunikationsnetz N mit drei untereinander verbundenen Netzelementen NE1, NE2 und NE3 und eine Netzüberwachungseinrichtung NMC, welche eine Verarbeitungseinheit PRU und eine damit verbundene Darstellungseinheit DIU aufweist. Die Netzelemente NE1, NE2 und NE3 sind jeweils, durch gestrichelte Linien dargestellt, mit der Verarbeitungseinheit PRU verbunden. Diese gestrichelte Linien symbolisieren ein Verwaltungsnetz (engl.: management network) oder Verwaltungsverbindungen, über welche Alarmmeldungen und Nachrichten der Netzelemente NE1, NE2 und NE3 an die Netzüberwachungseinrichtung NMC übermittelt werden.

Die Netzelemente NE1, NE2 und NE3 stellen Kommunikationsknoten des Kommunikationsnetzes N, insbesondere Vermittlungsstellen dar. Dem Stand der Technik gemäß weisen diese Netzelemente häufig eine standardisierte Datenbank auf, welche es im Fehlerfall ermöglicht, unabhängig vom Hersteller des jeweiligen Netzknotens oder seiner speziellen Ausgestaltung, standardisierte Fehlermeldungen mittels eines Standardprotokolls an die Überwachungseinrichtung NMC zu senden. Alternativ dazu erfolgt die Wandlung von Fehlermeldungen in ein Standardformat in einer Zwischeneinrichtung (Mediator) oder erst im der Überwachungseinrichtung NMC.

Die oben genannte ITU-Richtlinie X.733 definiert dazu für jede Alarmmeldung unter anderem die Parameter Ereigniszeit, Ereignistyp und Ereignisinformation. Die Ereigniszeit ist die Zeit des Alarmauftritts oder der Alarmgenerierung im Netzelement. Der Ereignistyp kategorisiert den aufgetretenen Alarm. Es kann sich dabei beispielsweise um einen Kommunikationsalarm, einen Servicequalitätsalarm (engl.: Quality of Service), Gerätefehleralarm, Verarbeitungsfehleralarm oder Umgebungsalarm handeln. Die Ereignisinformation beinhaltet eine detaillierte vordefinierte Information über die mögliche Ursache des Alarms. Als mögliche Ursachen für einen Kommunikationsalarms können beispielsweise ein Verbindungsherstellungsfehler (engl.: call establishment error) oder ein Signalverlust (engl.: loss of signal) gemeldet werden. Zur Ereignisinformation gehört auch eine Dringlichkeitsinformation. Dabei wird bewertet, wie groß die Auswirkungen auf das jeweilige Netzelement sind. Dabei werden sechs mögliche Stufen definiert: "Kritisch", (engl.: critical), "Dringend" (engl.: major), "Nicht dringend" (engl.: minor), "Warnung" (engl.: warning) , "Erledigt" (engl.: cleared) und "Nicht definiert" (engl.: indeterminate). Diese Stufen können unmittelbar als mögliche Zustände angesehen werden, welche ein Netzelement annehmen kann. Dabei wird beispielsweise der Zustand "Kritisch" einem Netzelement zugeordnet, für welches mindestens noch eine Alarmmeldung dieser Dringlichkeitsstufe ansteht. Alternativ kann die Überwachungseinrichtung NMC von diesen Dringlichkeitsstufen abweichende Zustände zuweisen, beispielsweise durch zusammenfassen mehrerer Dringlichkeitsstufen.

Dem Stand der Technik gemäß werden die von der Überwachungseinrichtung NMC empfangenen Alarmmeldungen in unterschiedlicher Form und gegebenenfalls mittels hierarchisch orientierter Darstellungsebenen jeweils als (Bildschirm-) Fenster auf einem Bildschirm der Darstellungseinheit DIU visualisiert. Wie einleitend beschrieben, wird ein Fenster mit einer Netzgrafik zur Übersicht angeboten, bei der die einzelnen Netzelemente NE1, NE2 und NE3 des zu überwachenden Kommunikationsnetzes N als kleine Bildobjekte oder sogenannte "Icons" dargestellt werden. Die Bildobjekte weisen beispielsweise einen Namen, ein Symbol für die Art des jeweiligen Netzelements, eine numerische Darstellung eingegangener, noch anhängiger Alarme und je nach aktueller Dringlichkeit, d.h. nach dem dringlichsten noch anstehenden Alarm eine definierte Alarmfarben annehmen kann. Die Beziehungen der Netzelemente untereinander werden durch Verbindungslinien dargestellt. Aufgrund des komplexen Beziehungsgeflechts kann nur eine sehr begrenzte Anzahl von Netzelementen in einem Fenster dargestellt werden. Um jedes Netzelement mit seinen Beziehungen bei Bedarf darstellen zu können, wird das Netz in mehrere Teilnetze oder Untergrafiken aufgeteilt, wobei in einer oberen Darstellungsebene diese Teilnetze jeweils als ein Bildobjekt angezeigt werden und erst bei anwählen oder anklicken eines solchen Bildelements eine entsprechende Untergrafik mit den darin enthaltenen Netzelementen gezeigt wird. Die Alarmfarbe eines als Bildschirmelement angezeigten Teilnetzes entspricht dabei der Alarmfarbe des dringlichsten aller in diesem Teilnetz anstehenden Alarme.

Ein weiteres Fenster zeigt beispielsweise in einer rollbaren (engl.: to scroll) Liste alle eingegangenen Alarmmeldungen in ihrer zeitlichen Reihenfolge an. Die eingegangenen Alarmmeldungen lassen sich dabei zur Darstellung vom Bediener nach unterschiedlichen definierten Kriterien filtern. So ist es beispielsweise möglich, nur Alarmmeldungen ab einem bestimmten Schweregrad anzuzeigen oder bestimmte Alarmmeldungen erst dann anzuzeigen, wenn eine bestimmte Anzahl gleichartiger Alarmmeldungen eingegangen ist. Optional können auch solche Alarmmeldungen unterdrückt werden, welche bereits erledigt sind, d.h. welche vom Bediener als erledigt quittiert wurden oder für welche im entsprechende Netzelement festgestellt wurde, dass die Ursache des Alarms nicht mehr gegeben ist und eine entsprechende Alarmmeldung in der Überwachungseinrichtung NMC eingeht.

Zur vorausschauenden Netzverwaltung ist es notwendig, eine Aussage über die dynamische Entwicklung der Zustände der Netzelemente NE1, NE2 und NE3 zu erhalten. Dazu definiert die oben genannte ITU-Richtlinie X.733 eine Trendanzeige (engl.: trend indication) für die Entwicklung der Dringlichkeit von Alarmen. Viele Netzelemente stellen allerdings komplexe Einrichtungen mit mehreren Unterelementen oder Objekten dar, wobei jedes dieser Objekte unabhängig Alarmmeldungen aussendet. Da die Ermittlung der genannten Trendanzeige im Netzelement NE1, NE2 oder NE3 erfolgt und als Parameter an die Netzüberwachungseinrichtung NMC übermittelt wird, kann sich eine solche Trendanzeige folglich immer nur auf das jeweilige Objekt beziehen. Dazu werden die in definierten aufeinanderfolgenden Zeitintervallen gemeldeten Alarme betrachtet und jeweils die Dringlichkeitsstufe derjenigen Alarmmeldung betrachtet, welche in einem der Zeitintervalle die höchste Dringlichkeitsstufe aufwies. Die Trendanzeige nimmt drei mögliche Zustände an: je nach dem, ob die höchste gemeldete Dringlichkeitsstufe eines aktuellen Zeitintervalls gegenüber der höchsten gemeldeten Dringlichkeitsstufe des zeitlich davor liegenden Intervalls höher, gleich oder niedriger ist, nimmt die Trendanzeige den Zustand "zunehmende Dringlichkeit", "keine Änderung" bzw. "abnehmende Dringlichkeit" an.

Diese Trendanzeige hat jedoch den Nachteil, dass sie keine Aussage über die Trend der Anzahl anliegender unerledigter Alarmmeldungen enthält und sich nur auf ein Objekt eines Netzelements NE1, NE2 oder NE3 bezieht. Häufig weisen alle eingehenden Alarmmeldungen eines Objekts die selbe Dringlichkeitsstufe auf. Beispielsweise wird ein Objekt einer Vermittlungsstelle, welche nahe an seiner Kapazitätsgrenze liegt, vermehrt Alarmmeldungen wegen fehlgeschlagener Verbindungsversuche melden. Mit zunehmender Auslastung der Vermittlungsstelle kommen in zunehmend kürzeren Zeitabständen gleichartige Meldungen. Dem Stand der Technik gemäß lösen derartige Alarmmeldungen, trotz zunehmender Häufigkeit eine neutrale Trendanzeige aus.

Erfindungsgemäß wird ein Zustandstrend gebildet, welcher anzeigt, wie sich die Anzahl der unerledigten Alarmmeldungen und damit der Zustand eines Netzelements NE1, NE2 oder NE3 entwickelt. Alternativ dazu kann ein Zustandstrend nur für Alarmmeldungen mit bestimmten Kriterien erfolgen, beispielsweise für unerledigte Alarmmeldungen einer bestimmten Dringlichkeitsstufe oder ab einer bestimmten Dringlichkeitsstufe. Ein unerledigte Alarmmeldung ist dabei eine Alarmmeldung, dessen ursächlicher Alarmgrund noch nicht behoben ist und daher noch keine Erledigungsmeldung, d.h. eine zur Alarmmeldung komplementäre Meldung, eingegangen ist. Die Erledigungsmeldung kann dabei von dem entsprechenden Netzelement NE1, NE2 oder NE3 kommen oder durch Eingabe des Bedienpersonals in der Netzüberwachungseinrichtung NMC erfolgen (nicht alle Netzelemente können Erledingsmeldungen selber initiieren). Denkbar ist auch, dass bei Ausbleiben einer Erledigungsmeldung eine Erledigung eines Alarms nach einer bestimmten Zeitdauer angenommen wird.

Dazu wird zu bestimmten Zeitpunkten, vorzugsweise in gleichlangen Zeitabständen, in die Netzüberwachungseinrichtung eingegangenen und noch nicht erledigten Alarme ermittelt. Diese Länge der Zeitintervalle können vordefiniert oder konfigurierbar sein. Im einfachsten Fall zeigt der Zustandstrend 3 Zustände an: zunehmende Anzahl, gleichbleibende Anzahl und abnehmende Anzahl. Alternativ kann der Zustandstrend mehr als drei Werte annehmen, indem beispielsweise zwischen schwacher Zunahme und starker Zunahme oder schwacher Abnahme und starker Abnahme weiter unterschieden wird.

Es ist auch möglich, bestimmte Schwellwertbedingungen für die Anzeige einer Trendänderung einzuführen. So kann definiert werden, dass ein Trend solange als neutral ausgewiesen wird, solange sich die zugrundeliegende Häufigkeit im aktuellen Zeitintervall nur unwesentlich von der entsprechenden Häufigkeit des letzten Zeitintervalls unterscheidet. Dadurch kann erreicht werden, dass ein Bediener der Überwachungseinrichtung (NMC) sich auf die wesentlichen Zustandsänderungen konzentrieren kann.

Alternativ ist es möglich, für jedes Zeitintervall die Anzahl der in diesem Zeitintervall eingehenden Alarmmeldungen oder Alarmmeldungen bestimmter Dringlichkeitsstufen für ein Netzelement NE1, NE2 oder NE3 zu ermitteln und die Entwicklung dieser Anzahl in einem Zustandstrend darzustellen. Ein solcher Zustandstrend zeigt dann die Häufigkeitsentwicklung des Eingangs von Alarmmeldungen an.

Fig.2 zeigt eine Bildschirmoberfläche oder Bilddarstellung DI auf einem Bildschirm der Darstellungseinheit DIU einer erfindungsgemäßen Überwachungseinrichtung beispielhaft mit drei Bildobjekten O1, O2 und O3, welche die Netzelemente NE1, NE2 bzw. NE3 des Kommunikationsnetzes N aus Fig.1 repräsentieren. Die Bildobjekte sind in Form einer dicht gepackten Matrix angeordnet. Jedes Bildobjekt weist dabei eine bestimmte Farbe, hier als Schwarz, Weis oder Schwarz schraffiert symbolisiert, und drei Anzeigefelder 11, 12 und 13 auf. Das erste Anzeigefeld 11 mit der Beschriftung NAME stellt ein Namensfeld zur Identifizierung des jeweiligen Netzelements dar. Das zweite Anzeigefeld 12 mit der Beschriftung N stellt ein Zahlfeld dar. In diesem Zahlfeld kann beispielsweise die Summe aller noch aktuellen oder nicht erledigter kritischer oder dringender Alarmmeldungen des jeweiligen Netzelements angezeigt werden. Das dritte Anzeigefeld zeigt einen Pfeil in einem Kreis, welcher je nach Ausrichtung einen Trend darstellt. Der beispielhaft im ersten Bildobjekt O1 waagerecht dargestellte Pfeil stellt einen neutralen Trend für das erste Netzelement NE1 dar, der beispielhaft im zweiten Bildobjekt O2 von links unten nach rechts oben dargestellte Pfeil stellt einen positiven Trend für das zweite Netzelement NE2 dar und der beispielhaft im dritten Bildobjekt O3 von links oben nach rechts unten dargestellte Pfeil stellt einen negativen Trend dar.

Den verschiedenen Zuständen der Netzelemente NE1, NE2 und NE3 wird, entsprechend ihres jeweiligen Alarmzustands, eine bestimmte Farbe zugeordnet, beispielsweise:
- Grün, solange keine aktuellen, d.h. keine oder nur erledigte Alarme vorliegen,
- Gelb, solange nur aktuelle Warnungen und nicht-dringende Alarme vorliegen,
- Orange, solange höchstens aktuelle dringende Alarme vorliegen und
- Rot für aktuelle Kritische Alarme.

Bisher ist davon ausgegangen worden, dass jeweils ein Bildobjekt O1, O2 oder O3 genau ein Netzelement NE1, NE2 oder NE3, beispielsweise eine Vermittlungsstelle, ein sogenanntes Gateway einen sogenannten Router oder einen Diensterechner repräsentiert. Wie einleitend erwähnt, können auch mehrere Netzelemente, beispielsweise die Netzelemente eines regionalen Teilnetzes als ein Bildobjekt dargestellt werden. Die Farbe dieses Bildobjekts entsprecht dann der Farbe jedes seiner Netzelemente, welches den kritischsten Zustand aufweist. Der Zustandstrend zeigt dann den Trend genau der Summe der Alarme und damit den Gesamtzustand aller betroffenen Netzelemente an.

Das erfindungsgemäße Verfahren erlaubt aufgrund der dichten Anordnung von Netzelementen NE1, NE2 und NE3 mit jeweils integriertem Trendzustand eine im hohen Grade komprimierte und gleichzeitig aussagekräftige Information über Zustände und dynamische Zustandsentwicklung eines umfangreichen Netzwerkes. Ein Bediener kann damit weitgehend auf andere Bilddarstellungen verzichten, solange er in Entwicklung hier keine Auffälligkeiten entdeckt. Erst, wenn beispielsweise ein Netzelement in einem kritischen Zustand zusätzlich einen positiven Trendzustand aufweist, muss der Bediener zum Erhalt detaillierter Information auf eine Ansicht mit vollständigen Alarmmeldungen zu diesem Netzelement wechseln.

Falls die Anzahl der Netzelemente eines zu überwachenden Kommunikationsnetzes K sehr groß ist, kann die Anzeige auf nach bestimmten Kriterien ausgewählte Netzelemente beschränkt werden. So kann als Auswahlkriterium beispielsweise definiert werden, dass nur Elemente ab einer bestimmten Dringlichkeitsstufe und mit neutralem oder positivem Zustandstrend angezeigt werden.

In einer Erweiterung der Erfindung wird bei Eingang bestimmter Meldungen oder Meldungen welche definierte Kriterien erfüllen, automatisch eine visuelle Darstellung eines Hinweis auf den Eingang dieser Meldung (z.B. durch Blinken entsprechender Bildobjekte) ausgelöst oder automatisch ein Dialog- oder Meldungsfenster mit einer entsprechenden Information auf dem Bildschirm Dl angezeigt (engl.: pop-up window).

Alternativ dazu wird der Inhalt mindestens einer aktuellen Meldung, insbesondere der Inhalt der letzten eingegangenen Meldung, eines Netzelements NE1, NE2 oder NE3 auf Anforderung angezeigt. So kann ein entsprechendes Dialog- oder Meldungsfenster generiert und angezeigt werden, wenn ein Bildobjekt O1, O2 oder O3 mittels eines Bildschirmzeigers (Bildschirmmaus) angewählt (angeklickt) wird. Diese Information kann auch in einem als Sprechblase ausgebildeten Meldungsfenster ( eine sogenannte "Blasenhilfe" ) angezeigt werden, wenn der Bildschirmkursor auf ein entsprechendes Bildobjekt geführt wird.

Während der in den Bildobjekten O1, O2 und O3 jeweils dargestellte Zustandstrend eine summarische Trendinformation jeweils der Netzelemente NE1, NE2 bzw. NE3 darstellt, kann eine detaillierte Trendinformation, z.B. die Anzahl der Alarme pro Schwere, die Anzahl neuer/gelöschter Alarme im letzten Intervall oder der Zustandstrend je Objekt eines Netzelements, auf Anforderung am Bildschirm DI angezeigt werden. Die Anforderung kann ebenso, wie in den letzten Abschnitten für eine (detaillierte) Darstellung von Meldungen beschrieben, mittels eines Meldefensters erfolgen.

## Patentansprüche

1. Verfahren zur visuellen Darstellung von Zuständen von Netzelementen (NE1, NE2, NE3) eines zu überwachenden Netzwerks (N) in einer Überwachungseinrichtung (NMC), wobei
• die ein Netzelement (NE1, NE2, NE3) betreffenden eingehenden Meldungen bewertet werden und daraus diesem Netzelement ein aktueller Zustand aus einer Menge möglicher Zustände zugewiesen wird,
• die Anzahl der ein Netzelement (NE1, NE2, NE3) betreffenden, eingegangenen und unerledigten Meldungen oder unerledigten Meldungen mit bestimmten Kriterien zu bestimmten Zeitpunkten ermittelt wird,
• Netzelemente (NE1, NE2, NE3) als Bildobjekte (O1, O2, O3) auf einem Bildschirm (DI) dargestellt werden,
**dadurch gekennzeichnet, dass**
ein aktueller Zustandstrend ermittelt wird, der die Entwicklung der zu bestimmten Zeitpunkten ermittelten Anzahl der Meldungen darstellt, und dass
• die Bildobjekte (O1, O2, O3) jeweils den aktuellen ermittelten Zustandstrend des entsprechenden Netzelements (NE1, NE2, NE3) darstellen.

2. Verfahren nach Anspruch 1, **dadurch gekennzeichnet, dass** die unerledigten Meldungen bestimmter Kriterien Alarmmeldungen einer bestimmten Dringlichkeitsstufe oder ab einer bestimmten Dringlichkeitsstufe darstellen.

3. Verfahren nach Anspruch 1, **dadurch gekennzeichnet, dass** nur Bildobjekte (O1, O2, O3) ausgewählter Netzelemente (NE1, NE2, NE3) dargestellt werden, wobei das Auswahlkriterium ein Vorliegen eines positivem Zustandstrends des entsprechenden Netzelements beinhaltet.

4. Verfahren nach Anspruch 1, **dadurch gekennzeichnet, dass** bei Eingang bestimmter Meldungen oder von Meldungen, welche definierte Kriterien erfüllen, automatisch eine visuelle Darstellung eines Hinweis auf den Eingang dieser Meldung oder einer dieser Meldung entsprechende Information auf dem Bildschirm (DI) ausgelöst wird.

5. Verfahren nach Anspruch 1, **dadurch gekennzeichnet, dass** eine Anzeige des Inhalts mindestens einer aktuellen Meldung, insbesondere der Inhalt der letzten eingegangenen Meldung, eines Netzelements (NE1, NE2, NE3) in einem Dialogfenster auf dem Bildschirm (DI) dann erfolgt, wenn das entsprechende Netzelement mittels eines Bildschirmzeigers angewählt wird.

6. Verfahren nach Anspruch 1, **dadurch gekennzeichnet, dass** eine Anzeige detaillierter Trendinformation in einem Dialogfenster auf dem Bildschirm (Dl) dann erfolgt, wenn das entsprechende Netzelement (NE1, NE2, NE3) mittels eines Bildschirmzeigers angewählt wird.

7. Überwachungseinrichtung (NMC) zur Überwachung eines Netzwerks (N) mit folgenden Mitteln:
• Empfangsmittel zum Empfang von Meldungen von Netzelementen oder für Netzelemente (NE1, NE2, NE3) des zu überwachenden Netzwerks (N),
• Zuweisungsmittel zum Zuweisen jeweils eines aktuellen Zustand aus einer Menge möglicher Zustände für einzelne Netzelemente (NE1, NE2, NE3),
• Bestimmungsmittel zum Bestimmen der Anzahl von unerledigten Meldungen oder unerledigter Meldungen mit bestimmten Kriterien eines Netzelements (NE1, NE2, NE3) jeweils zu bestimmten Zeitpunkten,
• Darstellungsmittel zum Darstellen von Netzelementen (NE1, NE2, NE3) als Bildobjekte (O1, O2, O3) auf einem Bildschirm (DIU),
**dadurch gekennzeichnet, dass**
die Überwachungseinrichtung (NMC) Berechnungsmittel umfasst zum Ermitteln eines aktuellen Zustandtrends, der die Entwicklung der zu bestimmten Zeitpunkten ermittelten Anzahl der Meldungen darstellt, und
die dargestellten Bildobjekte jeweils den aktuellen ermittelten Zustandstrend des entsprechenden Netzelements (NE1, NE2, NE3) darstellen.

8. Programmmodul zur Ausführung in einer Überwachungseinrichtung (NMC) zur Überwachung eines Netzwerks (N) mit Mitteln zur Steuerung der folgenden Schritte beim Betrieb auf der Überwachungseinrichtung;
• die ein Netzelement (NE1, NE2, NE3) betreffenden eingehenden Meldungen werden bewertet und daraus wird diesem Netzelement ein aktueller Zustand aus einer Menge möglicher Zustände zugewiesen,
• die Anzahl von unerledigten Meldungen oder unerledigter Meldungen mit bestimmten Kriterien eines Netzelements (NE1, NE2, NE3) werden jeweils zu bestimmten Zeitpunkten ermittelt,
• Netzelemente (NE1, NE2, NE3) werden als Bildobjekte auf einem Bildschirm (DI) dargestellt,
**dadurch gekennzeichnet, dass** das Programm modul Mittel umfasst zur Steuerung der folgenden Schritte beim Betrieb auf der Überwachungseinrichtung:
ein aktueller Zustandstrend wird ermittelt, wobei dieser Zustandstrend die Entwicklung der zu bestimmten Zeitpunkten ermittelten Anzahl der Meldungen darstellt, und
• die entsprechenden Bildobjekte (O1, O2, O3) stellen den aktuellen Zustandstrend des entsprechenden Netzelements (NE1, NE2, NE3) dar.

## Claims

1. Method for the visual representation of statuses of network elements (NE1, NE2, NE3) of a network (N) to be monitored in a monitoring facility (NMC),
• the incoming reports concerning a network element (NE1, NE2, NE3) being assessed and a current status out of a multiplicity of possible statuses being assigned therefrom to this network element,
• the number of received and uncleared reports, or uncleared reports having certain criteria, concerning a network element (NE1, NE2, NE3) being determined at certain points of time,
• network elements (NE1, NE2, NE3) being represented as image objects (O1, O2, O3) on a display screen (DI),
**characterized in that**
a current status trend is determined which represents the development of the number of reports determined at certain points of time, and
• the image objects (O1, O2, O3) respectively represent the current determined status trend of the corresponding network element (NN1, NE2, NE3).

2. Method according to claim 1, **characterized in that** the uncleared reports of certain criteria represent alarm reports of a certain urgency level or above a certain urgency level.

3. Method according to claim 1, **characterized in that** only image objects (O1, O2, O3) of selected network elements (NE1, NE2, NE3) are represented, the selection criterion including the presence of a positive status trend of the corresponding network element.

4. Method according to claim 1, **characterized in that**, upon receipt of certain reports or reports which fulfil defined criteria, a visual representation of an indication of the receipt of this report, or an information item corresponding to this report, is automatically triggered on the display screen (DI).

5. Method according to claim 1, **characterized in that** the content of at least one current report, in particular, the content of the last report to be received of a network element (NE1, NE2, NE3) is displayed in a dialogue window on the display screen (DI) when the corresponding network element is selected by means of a display screen pointer.

6. Method according to claim 1, **characterized in that** detailed trend information is displayed in a dialogue window on the display screen (DI) when the corresponding network element (NE1, NE2, NE3) is selected by means of a display screen pointer.

7. Monitoring facility (NMC) for monitoring a network (N), comprising the following means:
• receiving means for receiving reports from network elements or for network elements (NE1, NE2, NE3) of the network (N) to be monitored,
• assignment means for assigning respectively one current status from a multiplicity of possible statuses for individual network elements (NE1, NE2, NE3),
• determination means for determining the number of uncleared reports, or uncleared reports having certain criteria, of a network element (NE1,NE2, NE3) at certain points of time in each case,
• representation means for the representation of network elements (NE1, NE2, NE3) as image objects (O1, O2, O3) on a display screen (DIU),
**characterized in that**
the monitoring facility (NMC) comprises computation means for determining a current status trend which represents the development of the number of reports determined at certain points of time, and
the represented image objects respectively represent the current determined status trend of the corresponding network element (NE1, NE2, NE3).

8. Program module for executing, in a monitoring facility (NMC) for monitoring a network (N) and comprising control means, the following steps during operation on the monitoring facility:
• the incoming reports concerning a network element (NE1, NE2, NE3) are assessed and a current status out of a multiplicity of possible statuses is assigned therefrom to this network element,
• the number of uncleared reports, or uncleared reports having certain criteria, of a network element (NE1, NE2, NE3) are respectively determined at certain points of time,
• network elements (NE1, NE2, NE3) are represented as image objects on a display screen (DI),
**characterized in that**
the program module includes means for controlling the following steps during operation on the monitoring facility:
a current status trend is determined, this status trend representing the development of the number of reports determined at certain points of time, and
• the corresponding image objects (O1, O2, O3) represent the current status trend of the corresponding network element (NE1, NE2, NE3).

## Revendications

1. Procédé pour représenter graphiquement des états de noeuds de réseau (NE1, NE2, NE3) d'un réseau (N) surveillé dans un système de surveillance (NMC), moyennant quoi
• les signalisations d'information entrantes concernant un noeud de réseau (NE1, NE2, NE3) sont évaluées et, sur cette base, un état actuel parmi une quantité d'états possibles est assigné à ce noeud de réseau,
• le nombre de signalisations d'information entrées et en instance concernant un noeud de réseau (NE1, NE2, NE3) ou de signalisations d'information en instance avec des critères définis, est déterminé à des moments définis,
• des noeuds de réseau (NE1, NE2, NE3) sont représentés sur un écran (DI) sous la forme d'objets images (O1, O2, O3), **caractérisé en ce qu'**une tendance d'état actuelle est déterminée, qui représente le développement du nombre des signalisations d'information déterminé à des moments définis, et **en ce que**
• les objets images (O1, O2, O3) représentent respectivement la tendance d'état actuelle déterminée du noeud de réseau correspondant (NE1, NE2, NE3).

2. Procédé selon la revendication 1, **caractérisé en ce que** les signalisations d'information de critères définis, en instance, représentent des signalisations d'alarmes d'un degré de priorité défini ou à partir d'un degré de priorité défini.

3. Procédé selon la revendication 1, **caractérisé en ce que** seuls sont représentés des objets images (O1, O2, O3) de noeuds de réseau (NE1, NE2, NE3) sélectionnés, moyennant quoi le critère de sélection comprend une présentation d'une tendance d'état positive du noeud de réseau correspondant.

4. Procédé selon la revendication 1, **caractérisé en ce que** lors de l'entrée de signalisations d'information définies ou de signalisations d'information qui remplissent des critères définis, une représentation graphique d'une référence à l'entrée de cette signalisation d'information ou d'une information correspondant à cette signalisation d'information est déclenchée automatiquement sur l'écran (DI).

5. Procédé selon la revendication 1, **caractérisé en ce qu'**une indication du contenu d'au moins une signalisation d'information actuelle, en particulier le contenu de la signalisation d'information entrée en dernier, d'un noeud de réseau (NE1, NE2, NE3) est produite dans une fenêtre de dialogue à l'écran (DI), seulement lorsque le noeud de réseau correspondant est sélectionné au moyen d'un pointeur d'affichage.

6. Procédé selon la revendication 1, **caractérisé en ce qu'**une indication d'information de tendance détaillée est produite dans une fenêtre de dialogue à l'écran (DI), seulement lorsque le noeud de réseau correspondant (NE1, NE2, NE3) est sélectionné au moyen d'un pointeur d'affichage.

7. Système de surveillance (NMC) pour la surveillance d'un réseau (N) avec des moyens suivants :
• des moyens de réception pour recevoir des signalisations d'information de noeuds de réseau ou pour des noeuds de réseau (NE1, NE2, NE3) du réseau surveillé (N),
• des moyens d'assignation pour assigner respectivement un état actuel parmi une quantité d'états possibles pour différents noeuds de réseau (NE1, NE2, NE3),
• des moyens de définition pour définir le nombre de signalisations d'information en instance ou des signalisations d'information en instance selon des critères définis d'un élément de réseau (NE1, NE, NE3) respectivement à des moments définis,
• des moyens de représentation pour représenter des éléments de réseau (NE1, NE2, NE3) sous la forme d'objets images (O1, O2, O3) sur un écran (DIU),**caractérisé en ce que** le système de surveillance (NMC) comprend des moyens de calcul pour déterminer une tendance d'état actuelle, qui représente le développement du nombre de signalisations d'information déterminé à des moments définis, et **en ce que** les objets images représentés représentent respectivement la tendance d'état actuelle déterminée du noeud de réseau correspondant (NE1, NE2, NE3).

8. Module de programme pour réalisation dans un système de surveillance (NMC) pour surveiller un réseau (N) avec des moyens pour commander les étapes suivantes pendant l'exploitation dans le système de surveillance :
• les signalisations d'information entrantes concernant un noeud de réseau (NE1, NE2, NE3) sont évaluées et, sur cette base, un état actuel parmi une quantité d'états possibles est assigné à ce noeud de réseau,
• le nombre de signalisations d'information en instance ou de signalisations d'information avec des critères définis d'un noeud de réseau (NE1, NE2, NE3) sont déterminés respectivement à des moments définis,
• des noeuds de réseau (NE1, NE2, NE3) sont représentés sur un écran (DI) sous la forme d'objets images,**caractérisé en ce que** le module de programme comprend des moyens pour commander des étapes suivantes pendant l'exploitation dans le système de surveillance :une tendance d'état actuelle est déterminée, moyennant quoi cette tendance d'état représente le développement du nombre des signalisations d'information déterminé à des moments définis, et
• les objets images correspondants (O1, O2, O3) représentent la tendance d'état actuelle du noeud de réseau correspondant (NE1, NE2, NE3).
